# EUROPEAN PATENT SPECIFICATION

(11) **EP 3 498 137 B1**
(45) Date of publication and mention of the grant of the patent: **12.02.2020**
(21) Application number: 18466006.6
(22) Date of filing: 13.12.2018
(51) Int. Cl.: A47J 37/12

(54) **EQUIPMENT FOR THERMAL FOOD PROCESSING**
GERÄT ZUR THERMISCHEN BEHANDLUNG VON LEBENSMITTELN
ÉQUIPEMENT DE TRAITEMENT THERMIQUE D'ALIMENTS

(30) Priority: 14.12.2017 CZ 20170805
(43) Date of publication of application: 19.06.2019
(73) Proprietor: Jipa CZ s.r.o., 50303 Smirice (CZ)
(72) Inventor: PAVLIK, Jirí, 503 03 Smirice (CZ)
(74) Representative: Skoda, Milan

(56) References cited:
- EP-A1- 2 386 233
- WO-A1-2011/008977
- US-A- 3 975 997
- US-A- 4 287 818

## Description

### Technical Field

The invention relates to equipment for thermal food processing, specifically to equipment for the industrial thermal food processing consisting of a cooking vessel and at least one working vessel for insertion into the cooking vessel space.

### State of the Art

A number of design solutions of industrial equipment for the thermal processing of food which contain a cooking vessel have long been known.

Among such equipment can be included a frying and boiling device described in EP 1 371 313. This device comprises a cooking vessel into which baskets or containers of prepared foodstuff are inserted. The disadvantage of this device is that all containers and baskets are inserted into it manually, which is very labour-intensive and dangerous at the same time.

This deficiency is partly solved by patent EP 2 386 233, from which comes a device for immersing a container of food into a hot liquid bath mounted within the cooking vessel of a food processing machine. The device has a supporting arm on which individual containers can be placed. The support arm is connected with a drive mechanism which facilitates manipulation of the containers. The support arm has two side arms joined by a transverse rod. The disadvantage of this device is that after sealing the lid of the cooking vessel, it is not possible to verify the presence of the containers of food without reopening it, which may be a major technical problem, particularly in large operations.

It is clear from the above-mentioned technology that known devices have a number of disadvantages, with the greatest disadvantage being that there is no monitoring of the presence of the working vessel within the cooking vessel which, among other things, does not allow for efficient automation of food production.

The goal of the invention is the design of equipment for thermal food processing, which will allow the presence of a working container within the cooking vessel to be monitored and thereby allowing for effective automatisation.

### Principle of the Invention

The above-mentioned disadvantages are largely removed, and the objectives of the invention are fulfilled by equipment for thermal food processing, specifically equipment for thermal food processing comprising a frame, a cooking vessel and at least one working vessel for insertion into the cooking vessel space which is a frying basket and/or boiling basket according to the essence of the invention, characterised by that the working vessel is suspended on a hinged structure which is connected to a lever mechanism, which comprises a floating motor and an inductive sensor. The advantage is that after insertion using the hinged structure, the inductive sensor switches on and the equipment knows instantly that it is not possible to close the lid of the cooking vessel, fill it with water and, tilt the pan. After the working container has been suspended, manipulation is carried out provided by the floating motor.

It is to advantage when the hinged structure comprises a rod on which the working container is suspended, with the rod being mounted on arms which are mounted on a shaft which is rotatably mounted in the frame. The advantage is a simple, fully functional design.

It is to further advantage when the lever mechanism comprises a first arm on which is mounted a floating motor, which is simultaneously mounted to a second arm which is pivotally mounted in the frame.

It is also to advantage when the hinged structure is connected to the lever mechanism by means of a median shaft, on which the first arm of the lever mechanism is mounted, while it is to greatest advantage when there is connection of the floating motor and the second arm by a simultaneously mounted tension spring, which is attached to the frame by means of a lug fitting.

It is to further advantage when the second arm comprises a touch pad which is in intermittent contact with the inductive sensor. The use of an inductive sensor ensures high operational reliability.

To advantage, the inductive sensor is fixed to the frame and is connected to the control system by a cable. The great advantage being that this connection to the control system allows for much higher possibilities for automation.

It is also to great advantage when the floating motor is connected to the control system by a cable.

The main advantage of the equipment for thermal food processing according to the invention, is that it allows for considerably higher automation possibilities, thus after insertion of the tilting structure, the inductive sensor switches on and the device immediately knows its presence, automatically activating further steps associated with the presence of the cooking vessel, for example to activate programs for the preparation and monitoring of food processing. An advantage is also the increased safety associated with disabling the lid of the cooking vessel, filling with water and, tilting of the pan.

### Overview of the Figures

The invention will be further elucidated using drawings, in which Fig. 1 shows a spatial view of a working vessel suspended on a hinged construction and on the connection of the hinged construction is a lever mechanism with a floating motor and an induction sensor; Fig. 2 is a spatial side view of equipment for thermal food processing with a lever mechanism, a floating motor and, an induction sensor; and Fig. 3 is a spatial view of the inside of the equipment for thermal food processing with a working vessel suspended on a hinged construction.

### Examples of the Performance of the Invention

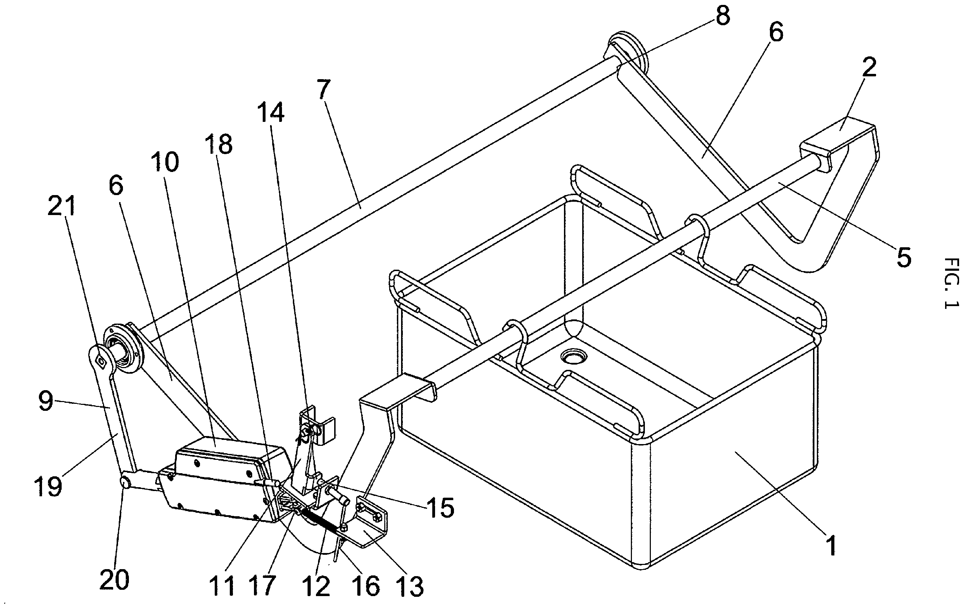

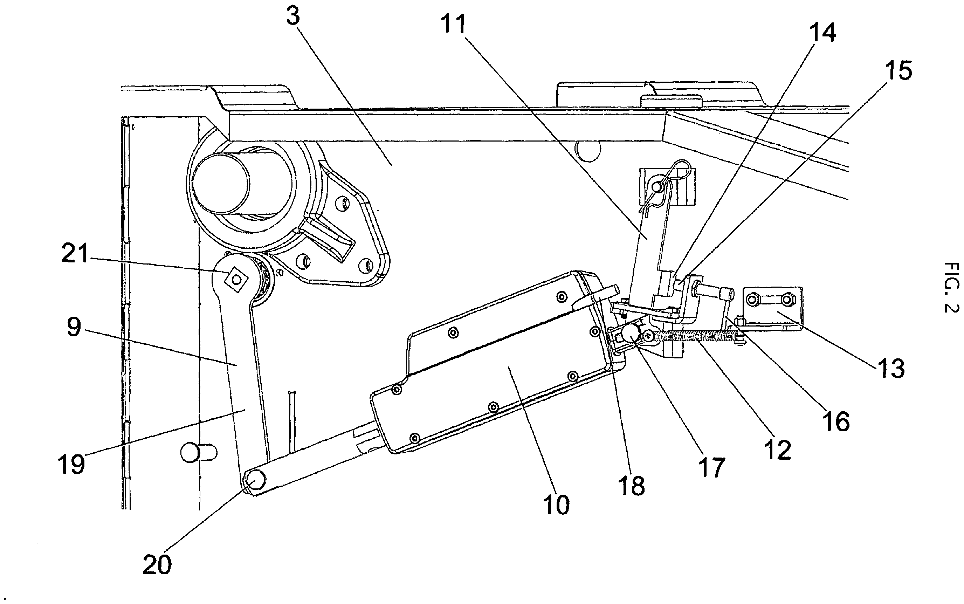

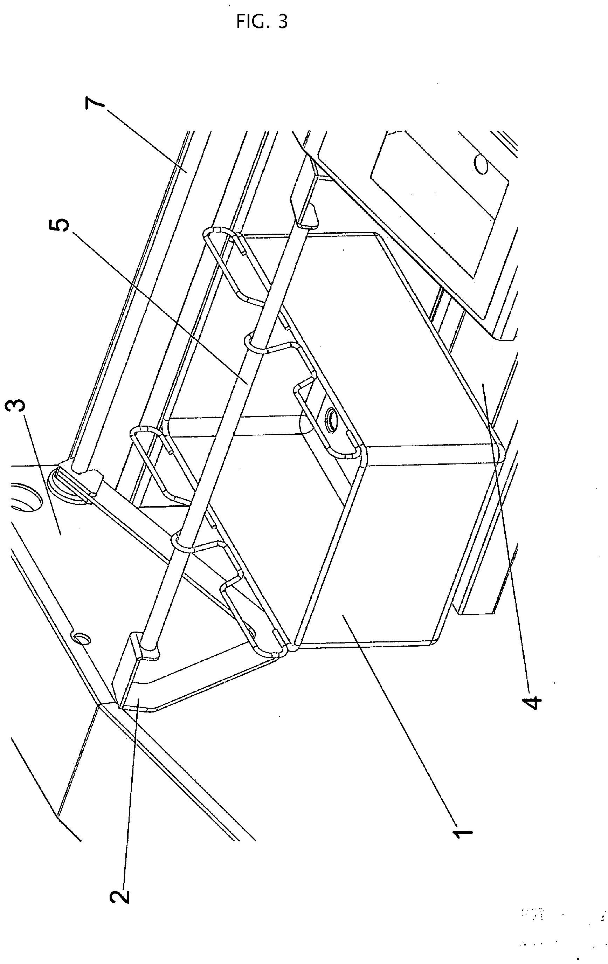

The equipment for thermal food processing (Fig. 1, Fig. 2, Fig. 3) comprising a frame 3, a cooking vessel 4 and one working vessel 1 for insertion into the cooking vessel 4 space which is, specifically, a boiling basket.

Alternatively, the working vessel 1 may be a frying basket.

The working vessel 1 is suspended on a hinged structure 2 which is connected to a lever mechanism 19 comprising a floating motor 10 and an inductive sensor 15.

The inductive sensor 15 is fixed to the frame 3 and is, by a cable 16, connected to the control system. The floating motor 10 is also connected by cable 18 to the control system.

The tilting structure 2 comprises a rod 5 on which is suspended the working vessel 1, and the rod 5 is mounted on the arms 6 which are mounted on a shaft 7 which is rotatably mounted in the frame 3. The arms 6 are connected with the shaft 7 by a slotted joint 8.

The lever mechanism 19 comprises a first arm 9 on which is mounted a floating motor 10 which is simultaneously mounted on a second arm 11 which is rotatably mounted in the frame 3. The first arm 9 is mounted on the shaft 7 by means of a shaped joint 21.

The hinged structure 2 is connected to the lever mechanism 19 by a median shaft 7 on which is mounted the first arm 9 of the lever mechanism 19.

In the connection of the floating motor 10 and the second arm 11, is simultaneously mounted a tension spring 12, which is fastened by means of a lug fitting 13 to the frame 3.

The second arm 11 contains a touch pad 14 which is in intermittent contact with the inductive sensor 15.

The first arm 9 is connected to the floating motor 10 by means of a pin 20 while simultaneously, the floating motor 10 is connected to the second arm 11 by a pin 17.

Equipment for thermal food processing according to the invention operates thusly; after inserting the tilting structure 2, the inductive sensor 15 switches on and the equipment switches to a state where the lid is disabled, water is pumped in and the pan is tilted, and immediately switches to the operating mode where the working vessel 1 is used and with this are activated the associated programs for preparation and monitoring of food processing. After the tilting structure 2 is removed, the device automatically returns to its original state and ceases to offer programs associated with the use of the working vessel 1.

### Industrial application

The equipment for thermal food processing according to the invention can be used for the thermal preparation of food in large scale catering concerns.

### List of Reference Marks

- 1: working vessel
- 2: tilting structure
- 3: frame
- 4: cooking vessel
- 5: rod
- 6: arm
- 7: shaft
- 8: slotted joint
- 9: first arm
- 10: floating motor
- 11: second arm
- 12: tension spring
- 13: lug fitting
- 14: touch pad
- 15: inductive sensor
- 16: cable I
- 17: pin I
- 18: cable II
- 19: lever mechanism
- 20: pin II
- 21: shaped joint

## Claims

1. An equipment for thermal food processing, specifically equipment for thermal food processing comprising a frame (3), a cooking vessel (4) and at least one working vessel (1) for insertion into a space of the cooking vessel (4), which is specifically a frying basket and/or a boiling basket, **characterised by that** the working vessel (1) is suspended on a tilting structure (2) which is connected to a lever mechanism (19), which comprises a floating motor (10) and an inductive sensor (15).

2. The equipment for thermal food processing according to claim 1, **characterised by that** the hinged structure (2) comprises a rod (5) on which is suspended the working vessel (1), wherein the rod (5) is mounted in the arms (6) which are mounted on a shaft (7) which is rotatably mounted in the frame (3).

3. The equipment for thermal food processing according to any one of the preceding claims, **characterised by that** the lever mechanism (19) comprises a first arm (9) on which is mounted a floating motor (10), which is simultaneously mounted on a second arm (11) which is rotatably mounted in the frame (3).

4. The equipment for thermal food processing according to any one of the preceding claims, **characterised by that** the hinged structure (2) is connected to the lever mechanism (19) by means of a median shaft (7), on the which is mounted the first arm (9) of the lever mechanism (19).

5. The equipment for thermal food processing according to claim 3, **characterised by that** in the connection of the floating motor (10) and the second arm (11) a tension spring (12) is mounted simultaneously, which is, by means of a lug fitting (13), fastened to the frame (3).

6. The equipment for thermal food processing according to any one of claims 3 to 5, **characterised by that** the second arm (11) comprises a touch pad (14) which is in intermittent contact with an inductive sensor (15).

7. The equipment for thermal food processing according to any one of the preceding claims, **characterised by that** the inductive sensor (15) is fixed to the frame (3).

8. The equipment for thermal food processing according to any one of the preceding claims, **characterised by that** the inductive sensor (15) is, by a cable, (16) connected to the control system.

9. The equipment for thermal food processing according to any one of the preceding claims, **characterised by that** the floating motor (10) is, by a cable (18), connected to the control system.

## Patentansprüche

1. Die Vorrichtung für thermische Zubereitung von Nahrungsmitteln, insbesondere eine Vorrichtung für thermische Zubereitung von Nahrungsmitteln, die einen Rahmen (3), ein Kochgefäß (4) und mindestens einen Arbeitsbehälter (1) zur Einführung in den Raum des Kochgeräts (4) aufweist, welches insbesondere ein Fritierungskorb und/oder ein Kochkorb, **ist dadurch gekennzeichnet, dass** der Arbeitsbehälter (1) an einer Kippkonstruktion (2) ausgesetzt ist, die mit einem Hebelmechanismus (19) verbunden ist, an dem ein schwimmender Motor (10) und ein Induktionssensor (15) angebracht werden.

2. Die Vorrichtung für thermische Zubereitung von Nahrungsmitteln nach Anspruch 1, **ist dadurch gekennzeichnet, dass** die Kippkonstruktion (2) eine Stange (5) aufweist, an der ein Arbeitsbehälter (1) ausgesetzt ist, wobei die Stange (5) in den Armen (6) und diese an einer Achse (7), und diese wiederum rotierend an einem Rahmen (3) angebracht werden.

3. Die Vorrichtung für thermische Zubereitung von Nahrungsmitteln nach einem der vorherigen Ansprüche, **ist dadurch gekennzeichnet, dass** der Hebelmechanismus (19) den ersten Arm (9) aufweist, an dem der schwimmende Motor (10) ausgesetzt, dieser zugleich am zweiten Arm (11), und dieser wiederum rotierend am Rahmen (3) ausgesetzt sind.

4. Die Vorrichtung für thermische Zubereitung von Nahrungsmitteln nach einem der vorherigen Ansprüche, **ist dadurch gekennzeichnet, dass** die Kippkonstruktion (2) mit dem Hebelmechanismus (19) mittels einer Achse (7) verbunden ist, an der der erste Arm (9) des Hebelmechanismus (19) ausgesetzt ist.

5. Die Vorrichtung für thermische Zubereitung von Nahrungsmitteln nach Anspruch 3, **ist dadurch gekennzeichnet, dass** in Verbindung mit dem schwimmenden Motor (10) und dem zweiten Arm (11) zugleich eine Zugfeder (12) angelegt wird, die mittels Abstandsscheibe (13) am Rahmen (3) ausgesetzt ist.

6. Die Vorrichtung für thermische Zubereitung von Nahrungsmitteln nach einer der Ansprüche 3 bis 5, **ist dadurch gekennzeichnet, dass** der zweite Arm (11) eine Berührungsfläche (14) aufweist, die im unterbrochenen Kontakt mit dem Induktionssensor (15) steht.

7. Die Vorrichtung für thermische Zubereitung von Nahrungsmitteln nach einer der vorherigen Ansprüche, **ist dadurch gekennzeichnet, dass** der Induktionssensor (15) am Rahmen (3) angebracht wird.

8. Die Vorrichtung für thermische Zubereitung von Nahrungsmitteln nach einer der vorherigen Ansprüche, **ist dadurch gekennzeichnet, dass** der Induktionssensor (15) über das Kabel (16) mit dem Steuerungssystem verbunden ist.

9. Die Vorrichtung für thermische Zubereitung von Nahrungsmitteln nach einer der vorherigen Ansprüche, **ist dadurch gekennzeichnet, dass** der schwimmende Motor (10) über das Kabel (18) mit dem Steuerungssystem verbunden ist.

## Revendications

1. Le dispositif pour la préparation thermique des aliments, notamment le dispositif pour la préparation thermique des aliments qui contient le cadre (3), le récipient de cuisson (4) et au moins un récipient de travail (1) pour la mise dans l'espace du récipient de cuisson (4) qui est notamment le panier de friture et/ou le panier de cuisson **caractérisé par le fait que** le récipient de travail (1) est suspendu à la construction basculante (2) qui est jointe au mécanisme de levier (19) qui contient le moteur flottant (10) et le capteur à induction (15).

2. Le dispositif pour la préparation thermique des aliments selon la revendication 1 **caractérisé par le fait que** la construction basculante (2) contient une barre (5) à laquelle un récipient de travail (1) est suspendu et en même temps la barre (5) est mise aux bras (6) qui sont mis à l'arbre (7) elle-même mise de manière pivotante au cadre (3).

3. Le dispositif pour la préparation thermique des aliments selon une des revendications précédentes **caractérisé par le fait que** le mécanisme de levier (19) contient le bras (9) auquel le moteur flottant (10) est fixé qui est en même temps il est mis au deuxième bras (11) qui est fixé de manière pivotant au cadre (3).

4. Le dispositif pour la préparation thermique des aliments selon une des revendications précédentes **caractérisé par le fait que** la construction basculante (2) est jointe au mécanisme de levier (19) moyennant l'arbre (7) à laquelle est fixé le premier bras (9) du mécanisme de levier (19).

5. Le dispositif pour la préparation thermique des aliments selon la revendication 3 **caractérisé par le fait que**, dans la jonction du moteur flottant (10) et du deuxième bras (11), est en même temps mis le ressort de traction (12) qui est à l'aide d'une cale (13) fixé au cadre (3).

6. Le dispositif pour la préparation thermique des aliments selon une des revendications 3 jusqu'à 5 **caractérisé par le fait que** le deuxième bras (11) contient la surface tactile (14) qui est dans le contact interrompu avec le capteur à induction (15).

7. Le dispositif pour la préparation thermique des aliments selon une des revendications précédentes **caractérisé par le fait que** le capteur à induction (15) est fixé au cadre (3).

8. Le dispositif pour la préparation thermique des aliments selon une des revendications précédentes **caractérisé par le fait que** le capteur à induction (15) est lié par le câble (16) au système de direction.

9. Le dispositif pour la préparation thermique des aliments selon une des revendications précédentes **caractérisé par le fait que** le moteur flottant (10) est lié par le câble (18) au système de direction..
